Europäisches Patentamt

European Patent Office

Office européen des brevets

(11) Veröffentlichungsnummer : **0 205 994**
**B1**

(12) **EUROPÄISCHE PATENTSCHRIFT**

(45) Veröffentlichungstag der Patentschrift :
11.10.89

(51) Int. Cl.⁴ : **F 16 B 13/00**, F 16 B 25/10

(21) Anmeldenummer : **86107404.5**

(22) Anmeldetag : **31.05.86**

(54) Der Befestigung von Bauelementen an Wandverkleidungen aus einem Werkstoff mit geringer Eigenfestigkeit dienendes Element.

(30) Priorität : **14.06.85 DE 3521338**

(43) Veröffentlichungstag der Anmeldung :
**30.12.86 Patentblatt 86/52**

(45) Bekanntmachung des Hinweises auf die Patenterteilung : **11.10.89 Patentblatt 89/41**

(84) Benannte Vertragsstaaten :
**AT BE CH DE FR GB IT LI LU SE**

(56) Entgegenhaltungen :
EP--A-- 0 161 837
AT--B-- 237 870
DE--A-- 1 903 025
DE--A-- 2 256 938
DE--A-- 2 324 675

(73) Patentinhaber : **Olk, Heinz-Hermann**
**Baantjebur 5a**
**D-2984 Hage (DE)**

(72) Erfinder : **Olk, Heinz-Hermann**
**Baantjebur 5a**
**D-2984 Hage (DE)**

(74) Vertreter : **Jabbusch, Wolfgang, Dr.**
**Elisabethstrasse 6**
**D-2900 Oldenburg (DE)**

## Beschreibung

Die Erfindung betrifft ein Element zur Befestigung von Bauelementen an Wandverkleidungen, insbesondere Isolierverkleidungen, aus einem Werkstoff mit geringer Eigenfestigkeit, z. B. Hartschaum, das als in den Werkstoff einbringbarer Dübel mit einer zu einer Stirnseite hin offenen Innenbohrung zur Aufnahme eines Befestigungsmittels, wie einer Schraube oder dergleichen, ausgebildet ist und ein angeformtes Außengewinde sowie an derselben Stirnseite einen als Schlüsselansatz ausgebildeten Kopf aufweist.

Bei Räumen, die Wandverkleidungen aus einem Werkstoff mit geringer Eigenfestigkeit aufweisen, z. B. Kühlräume oder dergleichen, die Innenverkleidungen aus Isoliermaterial aufweisen, tritt das Problem auf, daß nach Anbringung der Wandverkleidung Gegenstände an einer Wand oder an der Decke des Raumes angebracht werden müssen, wie z. B. Schalt- und Regelgeräte, Beleuchtungskörper oder z. B. auch Paneele, beispielsweise aus Aluminium oder Kunststoff, zur Vertäfelung der Wandverkleidung. Da der zur Wandverkleidung verwendete Werkstoff, z. B. Hartschaum aus Polyurethan, eine geringe Eigenfestigkeit aufweist, in denen bekannte Elemente zur Befestigung von Bauelementen keinen festen Halt finden, muß jedes in dem wandverkleideten Raum anzubringende Bauelement mit relativ aufwendigen Unterkonstruktionen, z. B. mit Winkeleisen, die durch die Isolierschicht hindurchgeführt und mit der Mauer des Raumes verbunden werden, montiert werden. Durch derartige Unterkonstruktionen wird die Wandverkleidung jedoch durchbrochen. Hierdurch treten, sofern es sich bei der Wandverkleidung z. B. um eine Isolierverkleidung handelt, unerwünschte Kälte- bzw. Wärmebrücken auf. Insbesondere in Kühl- oder Tiefkühlräumen wird unter der Isolierverkleidung eine Wasserdampfsperre aufgebracht. Durch zur Befestigung von Bauelementen notwendige Unterkonstruktionen, die die Wandverkleidung durchbrechen, wird diese Wasserdampfsperre an Stellen, wo Elemente zur Befestigung durch die Isolierverkleidung hindurchgeführt sind, in ihrer Funktion beeinträchtigt.

Nach der DE-A-2 256 938 ist zwar ein als Dübel mit Außengewinde ausgebildetes Element bekannt. Dieses dient jedoch der Befestigung von schweren Gegenständen an Wänden aus beispielsweise Gips, die noch, gegenüber Isolierverkleidungen, höhere Belastbarkeit haben. Das bekannte, als Dübel ausgebildete Element ist formschlüssig in ein hierfür vorgesehenes Bohrloch eindrehbar, wobei sein als selbstschneidendes Gewinde ausgebildetes Außengewinde in den Werkstoff der Wand unter Abtragung von Wandwerkstoff in das Bohrloch einzudrehen ist. Für eine Verankerung in Wandverkleidungen aus relativ weichem Isoliermaterial, z. B. Hartschaum aus Polyurethan, ist das bekannte Element nicht geeignet. Es erfordert stets ein vorgefertigtes Bohrloch, durch welches das Gefüge des Wandwerkstoffes von vornherein bereits in seiner Festigkeit geschwächt wird. Ein Bohrloch bewirkt außerdem in nachteiliger Weise eine Herabsetzung der Isolierfunktion einer Wandverkleidung. Da das selbstschneidende Gewinde des bekannten Elementes während des Eindrehens in das Bohrloch auch Wandwerkstoff in der Umgebung des Bohrloches abträgt, erfolgt noch eine weitere Schwächung des Werkstoffgefüges, die das bekannte Element für vorbeschriebene Einsatzzwecke ungeeignet macht. Außerdem ist das bekannte Element mit dem Nachteil behaftet, daß es nur mit Spezialwerkzeugen in das zugeordnete Bohrloch eindrehbar ist.

Der Erfindung liegt die Aufgabe zugrunde, ein Element der eingangs genannten Gattung zu schaffen, das eine Befestigung eines Bauelementes an einer insbesondere der Isolierung dienenden Wandverkleidung aus einem Werkstoff mit geringer Eigenfestigkeit ermöglicht, ohne daß hierbei die Isolierfunktion der Wandverkleidung stellenweise unwirksam gemacht wird.

Diese Aufgabe ist erfindungsgemäß dadurch gelöst, daß das Element die Form eines zum setzseitigen Ende hin gerichteten Spitzkegels hat.

Das als Dübel ausgebildete erfindungsgemäße Element kann in einfacher Weise in den Werkstoff eingebracht werden und weist durch sein Außengewinde eine nach außen vorstehende Profilierung auf, mit deren Hilfe es sich so fest in dem Werkstoff verankert, daß an ihm mit herkömmlichen Befestigungsmitteln das anzubringende Bauelement befestigt werden kann und auf diese Weise sicheren Halt bekommt.

Der erfindungsgemäße Dübel kann mit Vorteil in die Isolierverkleidung eingeschraubt werden, wobei das Isoliermaterial in den Gewindegängen zusammengedrückt und verdichtet wird und so dem Dübel einen ausreichenden Halt bietet. Je größer die Gewindetiefe ist und je mehr Gewindegänge der Dübel aufweist, desto sicherer ist sein Halt in der Wandverkleidung. Der Dübel kann mit Vorteil so weit in die Wand eingeschraubt werden, bis er genügend Halt hat, die Wandverkleidung aber noch nicht vollständig durchbrochen ist, so daß sie ihre Wirksamkeit, insbesondere ihre Isoliereigenschaft, behält. Da die Wandverkleidung in den Gewindegängen des Außengewindes mit dem Dübel verzahnt ist, wird mit Vorteil auch eine eventuelle Funktion der Wandverkleidung als Wasserdampfsperre durch den Dübel nicht beeinträchtigt. An der frei zugänglichen Stirnfläche des in die Wandverkleidung eingebrachten Dübels kann das anzubringende Bauelement mit Hilfe von herkömmlichen Befestigungsmitteln, z. B. Schrauben, montiert werden.

Da das erfindungsgemäße Element die Form eines Spitzkegels aufweist, kann es ohne größeren Widerstand wie eine Schraube in die Wandverkleidung eindringen.

Die Ganghöhe des spitzkegelig ausgebildeten erfindungsgemäßen Elementes ist vorzugsweise über die ganze Länge des Außengewindes konstant, so daß das Außengewinde eine zur Spitze des Spitzkegels hin größer werdende Steigung aufweist, die gleichzeitig ein leichtes Eindringen des Dübels in die Wandverkleidung und einen sicheren Halt des eingesetzten Dübels begünstigt.

Vorzugsweise ist das Außengewinde des erfindungsgemäßen Elementes ein Spitzgewinde, weil sich Spitzgewinde aufgrund ihres erhöhten Reibschlusses in besondere Weise für Elemente der hier in Rede stehenden Art eignen.

In die zu einer Stirnseite hin offene Innenbohrung kann beispielsweise eine Maschinenschraube, Blechschraube oder dergleichen eingebracht werden, deren Außengewinde bei Einbringung der Schraube in das Element ein entsprechendes, reibschlüssiges Innengewinde in die Wandung der Innenbohrung schneiden. Selbstverständlich kann die Innenbohrung auch ein entsprechendes, vorgefertigtes Innengewinde aufweisen.

Der an der Stirnseite vorhandene, als Schlüsselansatz ausgebildete Kopf hat den Vorteil, daß ein handelsübliches Handwerkzeug, vorzugsweise ein Schraubenschlüssel, insbesondere Ringschlüssel, angesetzt werden kann, so daß das erfindungsgemäße Element leicht und sicher in die Wandverkleidung ein- und, falls erwünscht, auch wieder herausgeschraubt werden kann.

Vorzugsweise ist das erfindungsgemäße Element aus Kunststoff, insbesondere Polyäthylen, ausgeformt. Das aus Kunststoff ausgeformte Element ist mit Vorteil selbst ein thermischer Isolator, so daß gewünschte Isoliereigenschaften der Wandverkleidung am Ort des Dübels kaum verändert werden. Das vorzugsweise als Werkstoff für das erfindungsgemäße Element verwendete Polyäthylen ist darüber hinaus temperaturbeständig und schlagfest.

Bei bevorzugten Ausbildungen des erfindungsgemäßen Elementes ist die Ganghöhe des Außengewindes 7 bis 11 mm, vorzugsweise 9 mm, und die Gewindetiefe 6 bis 9 mm, vorzugsweise 7,5 mm. Ein Außengewinde, das in den genannten Toleranzbereichen die bevorzugten Abmessungen aufweist, gibt dem erfindungsgemäßen Element erfahrungsgemäß, insbesondere in Wandverkleidungen aus Hartschaum, einen sicheren Halt.

Ein Ausführungsbeispiel ist in der Zeichnung dargestellt. Es zeigen :

Fig. 1 eine Seitenansicht eines erfindungsgemäßen Dübels und

Fig. 2 eine Stirnansicht des Dübels gemäß Fig. 1.

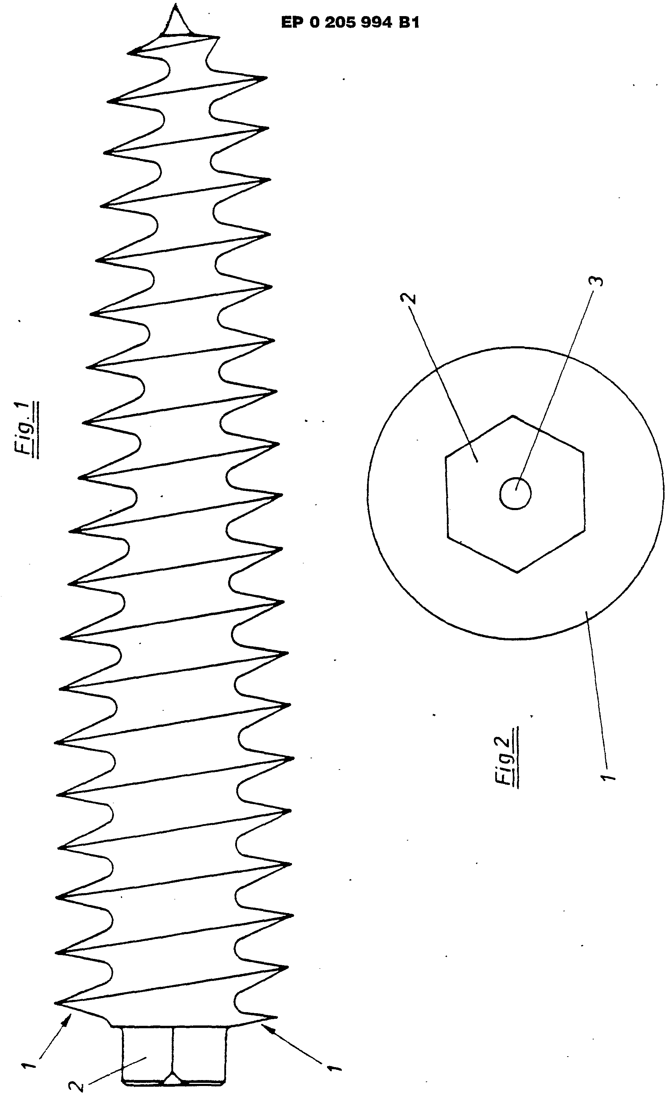

In Fig. 1 ist die Seitenansicht eines erfindungsgemäßen Dübels dargestellt. Der Dübel weist ein als Spitzgewinde ausgebildetes Außengewinde 1 auf. Der Dübel ist in der Form eines Spitzkegels ausgebildet. Die Ganghöhe des Außengewindes 1 ist über die Länge des Dübels konstant, so daß der Steigungswinkel des Außengewindes 1 zur Spitze des Spitzkegel hin zunimmt.

An seiner Stirnfläche weist der Dübel als Schlüsselansatz einen sechskantig ausgebildeten Kopf 2 auf, an dem ein Schraubenschlüssel angesetzt werden kann.

In Fig. 2, in der gleiche Bauelemente mit gleichen Bezugszahlen bezeichnet sind wie in Fig. 1, ist zu erkennen, daß der Dübel eine entlang seiner Längsmittelachse verlaufende und im Kopf 2 ansetzende Innenbohrung 3 aufweist, in die ein Befestigungsmittel, z. B. eine Schraube, eingebracht werden kann.

## Patentansprüche

1. Element zur Befestigung von Bauelementen an Wandverkleidungen, insbesondere Isolierverkleidungen, aus einem Werkstoff mit geringer Eigenfestigkeit, z. B. Hartschaum, das als in den Werkstoff einbringbarer Dübel mit einer zu einer Stirnseite hin offenen Innenbohrung (3) zur Aufnahme eines Befestigungsmittels, wie einer Schraube oder dergleichen, ausgebildet ist und ein angeformtes Außengewinde sowie an derselben Stirnseite einen als Schlüsselansatz ausgebildeten Kopf (2) aufweist, dadurch gekennzeichnet, daß das Element die Form eines zum setzseitigen Ende hin gerichteten Spitzkegels hat.

2. Element nach Anspruch 1, dadurch gekennzeichnet, daß das Außengewinde (1) zur Spitze des Spitzkegels hin größer werdende Steigung aufweist.

3. Element nach einem der Ansprüche 1 und 2, dadurch gekennzeichnet, daß das Außengewinde (1) ein Spitzgewinde ist.

4. Element nach einem der vorhergehenden Ansprüche, dadurch gekennzeichnet, daß es aus Kunststoff, insbesondere Polyäthylen, ausgeformt ist.

5. Element nach einem der vorhergehenden Ansprüche, dadurch gekennzeichnet, daß die Ganghöhe des Außengewindes (1) 7 bis 11 mm, vorzugsweise 9 mm, ist.

6. Element nach einem der vorhergehenden Ansprüche, dadurch gekennzeichnet, daß die Gewindetiefe des Außengewindes (1) 6 bis 9 mm, vorzugsweise 7,5 mm, ist.

## Claims

1. An element for fastening construction elements to wall panels, in particular insulating panels, of a material with a low inherent stability, for example hard foam, which (element) is in the form of a peg insertable in the material and having an internal bore (3) open towards one end face for receiving a fastening means such as a screw or the like and which has an integrally formed external thread and a head (2) formed as a key attachment on the same end face, characterized in that the element is in the form of a pointed cone facing the application end.

2. An element according to Claim 1, characterized in that the external thread (1) has a pitch which becomes larger towards the tip of the pointed cone.

3. An element according to one of Claims 1 and 2, characterized in that the external thread (1) is a V-thread.

4. An element according to any one of the preceding Claims, characterized in that it is formed from plastics material, in particular polyethylene.

5. An element according to any one of the preceding Claims, characterized in that the lead of the external thread (1) is 7 to 11 mm, preferably 9 mm.

6. An element according to any one of the preceding Claims, characterized in that the depth of the external thread (1) is 6 to 9 mm, preferably 7.5 mm.

**Revendications**

1. Elément destiné à la fixation d'éléments de construction sur des revêtements de murs, en particulier des revêtements isolants, constitué d'un matériau dont la résistance propre est faible, par exemple de la mousse rigide, se présentant sous la forme d'une cheville à introduire dans le matériau, avec un perçage intérieur (3) ouvert vers une face frontale, destiné à recevoir un moyen de fixation tel qu'une vis ou similaire, et qui présente un filetage formé sur l'élément, ainsi que sur la même face frontale, une tête (2) conformée de manière à servir d'appui à une clef, caractérisé en ce que l'élément a la forme d'un cône pointu dirigé vers l'extrémité du côté de la pose.

2. Elément selon la revendication 1, caractérisé en ce que le filetage (1) présente un pas croissant vers la pointe du cône pointu.

3. Elément selon l'une des revendications 1 et 2, caractérisé en ce que le filetage (1) est un filetage pointu.

4. Elément selon l'une des revendications ci-dessus, caractérisé en ce qu'il est en matière plastique, en particulier en polyéthylène.

5. Elément selon l'une des revendications ci-dessus, caractérisé en ce que la hauteur du pas du filetage (1), est comprise entre 7 et 11 mm, de préférence égale à 9 mm.

6. Elément selon l'une des revendications ci-dessus, caractérisé en ce que la profondeur du filet du filetage (1) est comprise entre 6 et 9 mm, de préférence égale à 7,5 mm.

EP 0 205 994 B1

Fig.1

Fig.2